# EUROPEAN PATENT SPECIFICATION

(11) **EP 2 443 663 B1**
(45) Date of publication and mention of the grant of the patent: **08.08.2018**
(21) Application number: 10739708.5
(22) Date of filing: 15.06.2010
(51) Int. Cl.: H01L 31/042

(54) **ELECTRICAL GRID SOLAR ENERGY HARVESTING SYSTEM**
SONNENENERGIEGEWINNUNGSSYSTEM FÜR EIN STROMNETZ
SYSTÈME POUR COLLECTER DE L'ÉNERGIE SOLAIRE À PARTIR D'UN RÉSEAU ÉLECTRIQUE

(30) Priority: 15.06.2009 US 187060 P
(43) Date of publication of application: 25.04.2012
(73) Proprietor: Fishler, Yehoshua, 60850 Shoham (IL)
(72) Inventor: Fishler, Yehoshua, 60850 Shoham (IL)
(74) Representative: ABG Patentes, S.L.
(86) International application number: PCT/IL2010/000472
(87) International publication number: WO 2010/146583

(56) References cited:
- CA-A1- 2 004 980
- DE-A1- 4 038 646
- DE-A1- 4 431 154
- JP-A- 2004 235 188
- KR-A- 20080 065 818
- US-A- 5 212 916
- US-A1- 2008 061 193
- US-A1- 2008 135 095
- US-A1- 2009 146 501

## Description

### FIELD AND BACKGROUND OF THE INVENTION

The present invention, in some embodiments thereof, relates to a system for harvesting solar energy and, more particularly, but not exclusively, to a system and a method for harvesting different forms of energy, including solar energy, through an electrical grid.

Harvesting of solar energy is an alternative form of producing renewable nonpolluting energy for the production of electricity instead of using non-renewable energy resources such as coal and oil that generate pollution. The main technologies presently used for harvesting solar energy include use of photovoltaic cells which convert solar energy into electricity using photoelectric effect, and concentrating sunlight into a beam using mirrors which are focused to a central point which includes a plant for generating electricity from the heat of the concentrated beam.

Some types of facilities for harvesting solar energy include solar energy farms which may use large numbers of solar panels with photovoltaic cells and/or large number of mirrors to concentrate the sunlight. These farms generally require large tracts of land to accommodate the large number of panels and/or mirrors, which generally are connected to structures which allow tracking of the sun. Some of the tracking structures include rotary motion and tilting of the panels and/or mirrors. Others include cable-based tracking systems. One such cable-based tracking system is described in "SOLAR WINGS A NEW LIGHTWEIGHT PV TRACKING SYSTEM", F. P. Baumgartner et al., 23rd EU PVSEC, Valencia 2008-09-04; and in "EXPERIENCES WITH CABLE-BASED SOLAR WINGS TRACCKING SYSTEM AND PROGRESS TOWARD TWO-AXIS LARGE SCALE SOLAR SYSTEM", F. P. Baumgartner et al., Proceedings of the 24th European Photovoltaic Solar Energy Conference, Hamburg 21st Sept. 2009.

Additional background art includes U. S. Patent 5241147 and U. S. Patent 5965956.

### SUMMARY OF THE INVENTION

There is provided, in accordance with claim 1, a system for harvesting solar energy from an electric grid comprising a solar panel including an insulating material and a photovoltaic module attached to the insulating material, the solar panel adapted to be mounted onto a live power line in the electric grid.

In the present invention, the solar panel is longitudinally disposed along at least a portion of a length of the live power line.

In some embodiments of the present invention, the electric grid comprises a dummy line.

In some embodiments of the present invention, the solar panel is further adapted to be mounted onto the dummy line.

In some embodiments of the present invention, the insulating material comprises an insulating flexible membrane sheet.

In some embodiments of the present invention, the live power line is embedded in the insulating material.

In some embodiments of the present invention, solar panel comprises electrically insulating clips for attaching the solar panel to the live power line.

In some embodiments of the present invention, the solar panel comprises a cavity configured to contain a fluidic gas.

In some embodiments of the present invention, the fluidic gas is a lighter-than-air (light) gas.

In some embodiments of the present invention, the fluidic gas exhibits fluorescent properties.

In some embodiments of the present invention, the solar panel produces a light.

In some embodiments of the present invention, the system comprises a support structure for supporting a weight of the solar panel.

In some embodiments of the present invention, the support structure comprises a central support cable extending between two pylons in the electrical grid.

In some embodiments of the present invention, the support structure comprises tension cables for connecting the solar panel to the central support cable.

In some embodiments of the present invention, the photovoltaic module is adapted to concentrate solar energy.

In some embodiments of the present invention, the system comprises a reflective cover for reflecting solar energy.

In some embodiments of the present invention, the system is adapted to harvest heat.

There is provided, in accordance with claim 8, a method for harvesting solar energy from an electric grid comprising mounting a solar panel including an insulating material and a photovoltaic module attached to the insulating material, onto a live power line in the electric grid.

In the present invention, the method comprises longitudinally disposing the solar panel along at least a portion of a length of the live power line.

In some embodiments of the present invention, the method comprises including a dummy line in the electric grid.

In some embodiments of the present invention, the method further comprises mounting the solar panel onto the dummy line.

In some embodiments of the present invention, the method comprises embedding the live power line in the insulating material.

In some embodiments of the present invention, the method comprises attaching the solar panel to the live power line using electrically insulating clips.

In some embodiments of the present invention, the method comprises containing fluidic gas in a cavity in the solar panel.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

### BRIEF DESCRIPTION OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

### In the drawings:

Figure 1 schematically illustrates a perspective view of an exemplary electrical grid solar harvesting system, according to an embodiment of the present invention;
Figure 2 schematically illustrates a perspective view of an exemplary longitudinal solar panel in an electric grid solar harvesting system, according to some embodiments of the present invention;
Figures 3A - 3C schematically illustrate cross-sectional views A-A of exemplary longitudinal solar panels, according to some embodiments of the present invention;
Figures 4A and 4B schematically illustrate cross-sectional views A-A of exemplary longitudinal solar panels including a fluid gas, according to some embodiments of the present invention;
Figures 5A and 5B schematically illustrate cross-sectional views A-A of exemplary longitudinal solar panels including a fluorescent gas, according to some embodiments of the present invention;
Figure 6 schematically illustrate a cross-sectional view A-A of an exemplary longitudinal solar panel including a photovoltaic module for concentrated radiation, according to some embodiments of the present invention; and
Figure 7 illustrates a flow chart of a method to produce electricity using an electric grid solar energy harvesting system, according to some embodiments of the invention.

### DESCRIPTION OF EMBODIMENTS OF THE INVENTION

The present invention relates to a system for harvesting solar energy and, more particularly, to a system and a method for harvesting different forms of energy, including solar energy, through an electrical grid.

An aspect of some embodiments of the present invention relates to a solar energy harvesting system where the solar panels are deployed on power lines of the electrical grid for generating electricity. The power lines may include high voltage lines, medium voltage lines, and low voltage lines, any may form part of a national grid, regional grid, district grid, or local grid. Optionally, the power lines may be mounted on electricity steel pylons, lighting pylons or other type of pylons suitable for supporting power lines, including cement pylons, wooden pylons, and the like. A distance between pylons will generally be according to the topography, generally about 40 meters. Optionally, the pylons requires strengthening for mounting the panels on the power lines. A distinct advantage of installing the panels onto the power lines, in accordance with some embodiments of the invention, is a potential substantial savings in infrastructural investment and maintenance typically associated with a solar energy farm. The panels extend longitudinally along any length of the electrical grid eliminating a need for large tracts of land on which to set up the panels. Optionally or alternatively, a need for large, cumbersome, tracking structures onto which the panels are mounted is avoided. The optional connection of an inverter, which converts the direct current (DC) output by the panels to alternating current (AC) which can be fed into the electrical grid, can be performed essentially at any point along the grid (as the panels are on the power lines). This can eliminate a need for long distance cables frequently used to connect the inverter in the farm to the grid, possibly allowing for greater power to be delivered into the grid (power is lost along the way) and reducing the costs associated with the connection to the grid (cost of the cable and laying the cable, maintenance, etc.). In some embodiments, the electric grid may serve to store the power delivered into the grid by the system. Optionally, the grid may store the power delivered by a plurality of systems remotely located from one another as if they were from one large system. Optionally, the grid can store the power delivered by a plurality of systems on one long power line as being from a single source

In some embodiments, the solar panels are deployed on power lines of the electrical grid for producing solar energy and/or for further exploiting the electromagnetic radiation from the lines for harvesting other forms of energy. The panels, in some embodiments, include a fluid gas with a high thermal conductivity, optionally a high thermal capacity, for example a light gas such as helium or hydrogen, which is heated inside the panels by electromagnetic radiation (e.g., thermal radiation) from the power lines and which may be channeled by the system to an accumulator for heat storage for use in a thermodynamic cycle and/or for consumption, for example for district heating. Optionally, heating of the fluid gas inside the panels is done by generating heat by electric induction due to eddy currents created by, near and/or on the power lines. Optionally, the fluid gas is a fluorescent gas, for example neon, argon, mercury, and the like, which may be activated by the electromagnetic radiation field from the power lines, so that a fluorescent light is generated by the panel and serves for illumination. Optionally, the fluorescent lighting serves for road illumination. Additionally or alternatively, road illumination may be provided by regular road lamps which powered by stored solar power from the solar panels. Alternatively, the fluorescent gas is indirectly activated by an inductor which shoots electrons and is powered by the electromagnetic field. Additionally or alternatively, the fluid gas is helium or any other type of gas lighter than air and with high thermal conductivity, optionally high thermal capacity, which contributes to increasing panel buoyancy reducing weight stresses on system structural supports. Optionally, the fluidic gas is heated by heat from the sun or by wind pressure.

In some cases, connecting a solar panel between two power lines can create problems in the electric grid, and more so where high voltage lines are involved. Dirt, pollution, salt, and particularly water on the surface of the panel can create a conductive path across the panel, causing leakage currents and flashovers between the power lines. The flashover voltage can be more than 50% lower when the insulator is wet.

According to some embodiments of the present invention, leakage and flashover across the panel is substantially eliminated by connecting the panel along a first side to a live cable in the grid (the power line or live power line), and along an opposing second side to a dummy line, the dummy line comprising a cable which is not connected in the electric grid to any power sources. Alternatively, the live cable is a neutral line.

In some embodiments, the panel is equipped with electrically isolated attachment clips or similar for attaching the panel to the power lines in the electric grid. Optionally, the attachment clips are also used to attach the panel to the dummy line. Optionally, the conductors are embedded in the panel itself. Optionally, the power lines include overhead lines in a telephone grid or other overhead communication grids. Optionally, the panel is connected to two power lines, one on each side, and electrically isolated between the two lines.

In some embodiments, the panel is movable by rotating a cantilevered support on the pylon and to which it the panel is attached, so that it may be positioned horizontally, vertically, or inclined at an angle relative to a vertical and horizontal axis, optionally in a direction facing the sun. Optionally, the panel is fixed between the power line and dummy line, or between the neutral line and the dummy line, or hanging on one of the lines and free to swing. Optionally, the panel includes holes to allow air flow through the hole and reduce wind pressure on the panel. Optionally, the holes occupy between 20% - 80% of the total area of the panel. Optionally, the panel includes rounded edges and/or includes portions with rounded contours to reduce resistance to airflow. Optionally, the panel is elliptical in shape. Additionally or alternatively, the panel is designed to withstand wind turbulence fluctuations and vibration harmonics. Optionally, a weight distribution of the panel is such that the panel is supported by the power lines and/or dummy line.

In some embodiments, the panel is supported by a support structure. Optionally, the support structure includes tension cables. Optionally, in order to stiffen the grid to wind, transverse vertical and/or diagonal rods are included between the cables for increasing moment of inertial and stiffness. Optionally, to maintain tension in supporting cables (power lines, dummy lines, and/or support structure), insulated tension regulating elements are connected to the support cables. Optionally, a panel width prevents the power lines from breaching regulatory clearances as to the distance to be maintained between the cables.

In the invention, the panels extend longitudinally along a portion of the length between pylons. Additionally, the panels will be of a relatively short length and configured to be inclined in a direction along the length of the grid.

In some embodiments, the panel includes a photovoltaic (PV) module comprising a plurality of photovoltaic (PV) cells attached to an electrically insulating material, for example a flexible membrane sheet such as a single-ply membrane sheet. The photovoltaic modules may include photovoltaic technologies known in the art such as, but not limited to, flexible film amorphous silicon or single crystalline or multi crystalline, arranged side-by-side, end-to-end, or adjacent to each other, or any combination thereof. Additionally or alternatively, the PV modules generate a greater amount of current as a result of the electromagnetic radiation (magnetic field) effect on quantum wells in the PV cells. More information on the effects of magnetic fields on quantum wells is found in "Photo-galvanic effect in asymmetric quantum wells"; K. Majchrowski et al, Journal of Physics: Conference Series 213 (2010) 012033. Optionally, the photovoltaic module is configured for absorbing concentrated solar radiation. Optionally, the modules are adhered to the flexible membrane, and the edges of the modules may include electrical connectors or electrodes which are arranged to face each other or be aligned with each other. Optionally, the electrical connectors are connected by a solder connection to module electrodes through apertures in the surface of the flexible membrane and are connected in series and/or cascade. Optionally, longitudinal edges on the sides of the panel and the ends are hermetically sealed. Additionally or alternatively, the series electrical connectors are connected directly to a DC electric junction box, to a combiner box, to another panel, and/or to the inverter, one or more of which are optionally included in the solar energy harvesting system.

In some embodiment, installed on the panel or on an electric pylon is the inverter. Optionally, a power counter is included in the system, the counter configured to count power supplied to the grid and to connect by telemetry to a monitoring center for reporting faults and the amount of power supplied. Additionally or alternatively, a controller is included in the system to control mechanical and/or electrical functions of the system such as, for example, panel tracking of the sun, data collection including quantity of electricity transfer to the grid, equipment operation monitoring, and fault detection, among others. Optionally, the system delivers current to the grid as an additional power source to the energized grid power or alternatively, as a single power source in the grid. Optionally, the solar harvesting system is designed for use in residential, commercial or industrial building structures connected to the same electric grid, and/or transmitted over a larger grid to remote consumers.

In some embodiments, the panel includes a mechanical cleaning mechanism. Optionally or alternatively, the mechanism includes an electrostatic mechanism, for example, an atomizing solenoid to atomize water droplets and/or to generate a quasi-static field for reducing dust on the panels. Optionally or alternatively, the panel includes a coating for substantially preventing adhering of dirt. Optionally or alternatively, the panel includes spikes, a net, or other means for preventing birds from resting on the panel. Additionally or alternatively, the panel includes a GPS (Global Positioning System) device for tracking a location of the panel, for example in case of theft.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

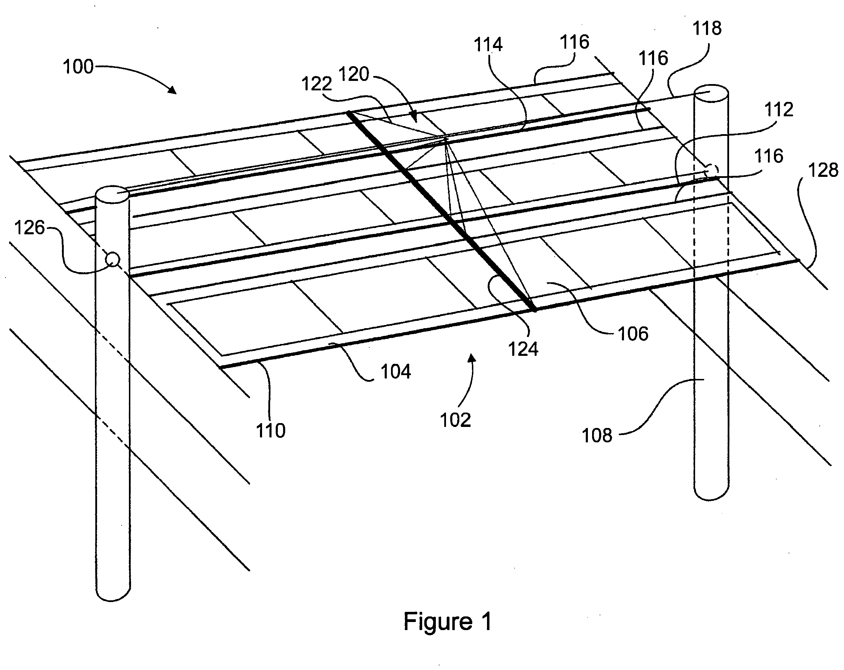

Referring now to the drawings, Figure 1 schematically illustrates a perspective view of an exemplary electrical grid solar harvesting system **100,** according to an embodiment of the present invention. System **100** includes three solar panels **102** mounted on power lines. System **100** is configured to collect solar energy and to convert the energy into electricity which is fed into the electrical grid. Optionally, system **100** is additionally configured to utilize electromagnetic radiation generated by power lines **110, 112,** and **114** to heat a fluid gas in panels **102** for producing heat which is stored and used for heat conversion and/or consumption. Additionally or alternatively, the electromagnetic radiation is used to produce light. Optionally, system **100** is additionally configured to utilize eddy currents in power lines **110, 112,** and **114** to produce heat by induction heating. Panel **102** includes a flexible insulating material **104** to which are attached PV modules **106.** Optionally, panel 102 longitudinally extends substantially a whole distance between two pylons **108,** and is attached longitudinally along a first side to a power line, and along an opposing second side to a dummy line. For example, as shown, first panel **102** is attached to power line **110** and to dummy line **116;** second panel **102** is attached to power line **112** and to dummy line **116;** and third panel **102** is attached to power line **114** and to dummy line **116.** Optionally, dummy line **116** may be a same line for two or even three panels **102.** Optionally, power lines **110, 112,** and **114** and dummy lines **116** are supported at both ends by cantilevered supports **128** in pylons **108,** so that panels **102** extend from one support to the other. Additionally or alternatively, this configuration may be repeated in a plurality of locations along the electric grid. Optionally, panels **102** extend along a portion of the distance between pylons **108,** while power lines **110, 112,** and **114,** and dummy lines **116,** are supported by support **128.**

In some embodiments, cantilevered support **128** is mechanically rotated by a motor **126** at a point of connection with pylon **108.** Rotating support **128** pivots panels **102** between a horizontal position and a vertical position for tracking the position of the sun. Optionally, panels **102** are pivoted into a vertical position for substantially preventing accumulation of snow on the panels. Optionally, panels **102** may be pivoted so that they are inverted (upside-down), for substantially preventing dew accumulating on PV modules **106.** Optionally, panels **102** may be inverted for applications where PV module **106** includes the ability to collect concentrated solar radiation. Optionally, the solar radiation is concentrated onto a heat pipe (not shown). Optionally, cantilevered support **128** is configured to be lowered to the ground with panels **102** for cleaning, inspection, and other maintenance and/or installation operations.

In some embodiments, system **100** includes a support structure **120** for supporting a weight of panels **102.** Optionally, support structure **120** includes a central support cable **118** extending from first pylon 108 to second pylon **108.** Optionally, support cable **118** supports panels **102** from above through tension cables **122** extending from the support cable to a transverse rod **124** included in each panel. Transverse rod **124** is designed to provide a transversal stiffness and to prevent panel **102** from collapsing.

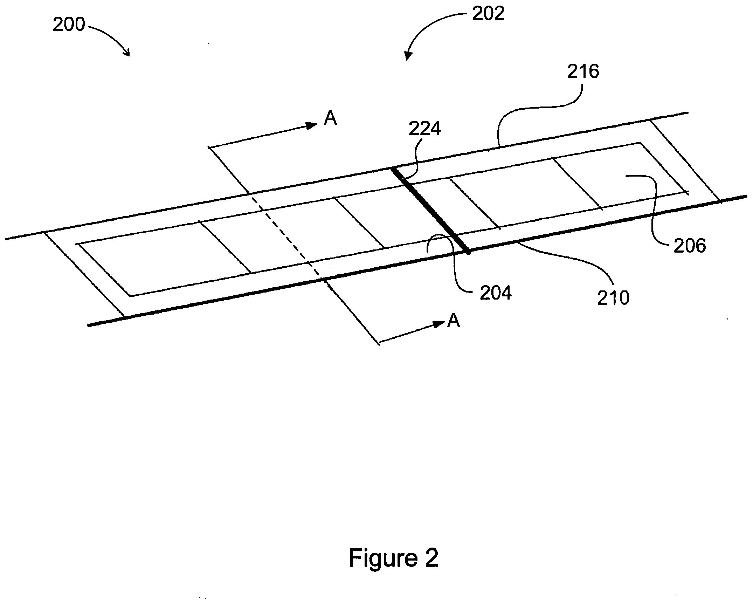

Reference is now made to Figure 2 which schematically illustrates a perspective view of an exemplary longitudinal solar panel **202** in an electric grid solar harvesting system **200,** according to some embodiments of the present invention. Optionally, system **200** and solar panel **202** are similar to system **100** and solar panels **102** shown in Figure 1. For exemplary purposes, solar panel **202** is shown longitudinally attached to power line **210** and dummy line **216,** which may be similar to that shown in Figure 1 at **110** and **116,** respectively.

In some embodiments, solar panel **200** includes a plurality of PV modules **206** attached to an insulated flexible membrane sheet **204,** the panel strengthened by a transverse rod **224.** PV modules **206,** sheet **204,** and rod **224** may be similar to that shown in Figure 1 at **106, 104,** and **124,** respectively. Optionally, flexible membrane sheet **204** is a thin, single ply membrane. Optionally, sheet **204** includes weight reducing holes (not shown). Optionally, sheet **204** includes holes for allowing wind flow through the membrane and reducing panel **202** resistance to the wind. Additionally or alternatively, sheet **204** may be reinforced with longitudinally, transversally and/or diagonally disposed metallic or non-metallic fiber spires, exposed and/or embedded in the sheet, for providing durability to the panel.

In some embodiments, sheet **204** includes a cavity designed to contain a fluid gas. Optionally, the cavity may contain a liquid fluid. Additionally or alternatively, the fluid gas is helium and serves to increase panel **202** buoyancy in air. Optionally, sheet **204** may include foam with closed bubbles filled with helium. Optionally, the fluid gas includes high electrical insulation properties and high thermal conductivity properties. Optionally, panel **202** produces relatively large amounts of heat by heating the fluid gas inside the cavity using induction heating from power line **210.** Optionally, the fluid gas exhibits fluorescent properties when exposed to an electromagnetic field. Optionally panel **202** produces fluorescent lighting by electromagnetically radiating the fluorescent gas in the cavity with radiation from power line **210.** Optionally, to produce fluorescent lighting dummy line **216** is connected to the neutral line on the electric grid.

In some embodiments, PV modules **206** includes PV technologies known in the art such as, but not limited to, flexible film amorphous silicon or single crystalline or multi crystalline, arranged side-by-side, end-to-end, or adjacent to each other, or any combination thereof. Optionally, PV module **206** is configured to absorb concentrated solar radiation reflected from within the cavity in sheet **204.**

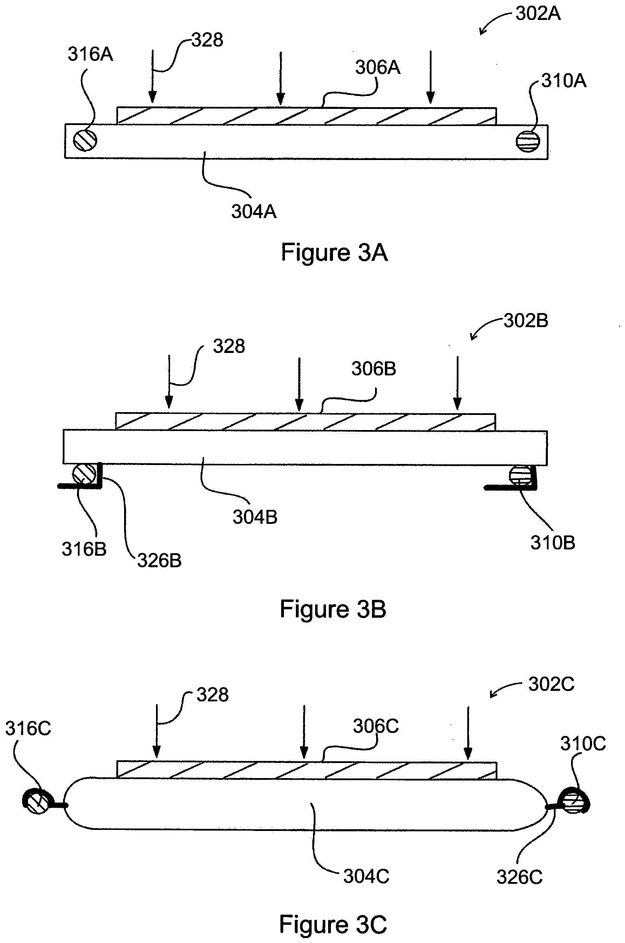

Reference is now made to Figures 3A - 3C which schematically illustrate cross-sectional views A-A of exemplary longitudinal solar panels **302A, 302B,** and **302C,** respectively, according to some embodiments of the present invention. The cross-sectional views are from a same direction as shown in Figure 2 for panel **202.**

In Figure 3A, solar panel **302A** includes a PV module **306A** and a flexible sheet membrane **304A.** Solar panel **302A** is optionally similar to panels **102** or **202** in Figures 1 or 2, respectively, and is configured to generate electricity from solar energy **328** impinging on PV modules **306A.** Optionally, power line **310A** and dummy line **316A** are embedded in sheet **304.**

In Figure 3B, solar panel 302B includes a PV module **306B** and a flexible sheet membrane **304B.** Solar panel **302B** is optionally similar to panels **102** or **202** in Figures 1 or 2, respectively, and is configured to generate electricity from solar energy **328** impinging on PV modules **306B.** Optionally, panel **302B** is attached to externally located power line **310B** and dummy line **316B** by means of isolating clips **326 B** attached to sheet **304B** and which allow the panel to rest on the lines.

In Figure 3C, solar panel **302C** includes a PV module **306C** and a flexible sheet membrane **304C.** Solar panel **302C** is optionally similar to panels **102** or **202** in Figures 1 or 2, respectively, and is configured to generate electricity from solar energy **328** impinging on PV modules **306C.** Optionally, panel **302C** is attached to externally located power line **310C** and dummy line **316C** by means of isolating clips **326C** attached to sheet **304C** and which support the panel from the side. Optionally, sheet **304C** includes rounded edges for improving airflow around the panel.

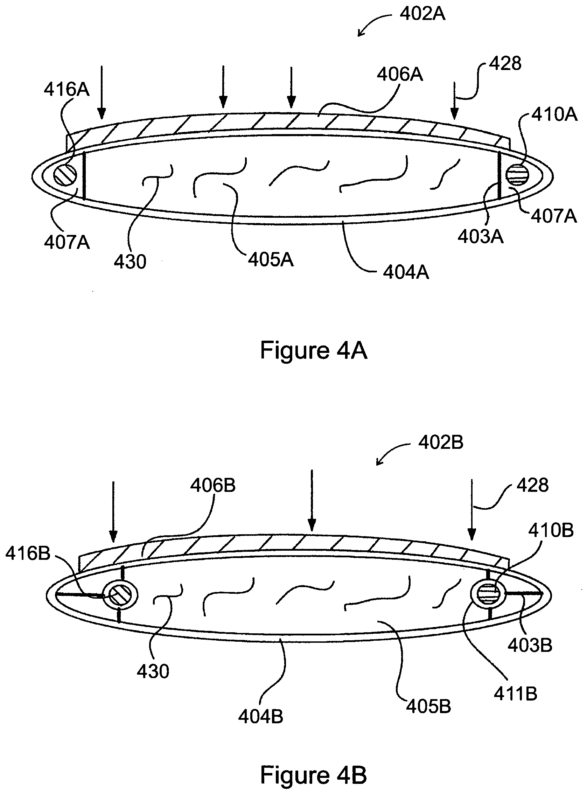

Reference is now made to Figures 4A and 4B which schematically illustrate cross-sectional views A-A of exemplary longitudinal solar panels **400A** and **400B,** respectively, including a fluid gas **430,** according to some embodiments of the present invention. The cross-sectional views are from a same direction as shown in Figure 2 for panel **202.** Optionally, solar panels **400A** and **400B** are elliptically shaped to allow for improved airflow around the panels.

In Figure 4A, solar panel **402A** includes a PV module **406A** and a flexible sheet membrane **404A** including a cavity **405A** with fluid gas **430.** Solar panel **402A** is optionally similar to panels **102** or **202** in Figures 1 or 2, respectively, and is configured to generate electricity from solar energy **428** impinging on PV modules **406A.** Optionally, solar panel **402A** heats fluid gas **430** inside cavity **405A** by heat generated from power line **410A** from inside a compartment **407A** inside the cavity. Optionally, a barrier wall **403A** separates power line **410A** from the rest of cavity **405A.** Optionally, dummy line **416A** is similarly located inside cavity **405A** inside a separate compartment **407A** separated from the rest of the cavity by a second barrier wall **403A.** Optionally, power line **410A** and dummy line **416A** may be located outside panel **402.**

In Figure 4B, solar panel **402B** includes a PV module **406B** and a flexible sheet membrane **404B** including a cavity **405B** with fluid gas **430.** Solar panel **402B** is optionally similar to panels **102** or **202** in Figures 1 or 2, respectively, and is configured to generate electricity from solar energy **428** impinging on PV modules **406B.** Optionally, solar panel **402B** heats fluid gas **430** inside cavity **405B** by heat generated through induction heating due to eddy currents in power line **410B.** Optionally, power line **410B** is enclosed within a metal sleeve **411B** which heats up due to the induction heating, the sleeve supported inside cavity **405B** by electrically isolating supports **403B.** Optionally, metal sleeve **411B** is of a metal with high thermal conductivity, for example aluminum. Optionally, dummy line **416B** is similarly enclosed in a second metal sleeve and supported by electrically isolating supports. Alternatively, dummy line **416B** is not enclosed in the metal sleeve.

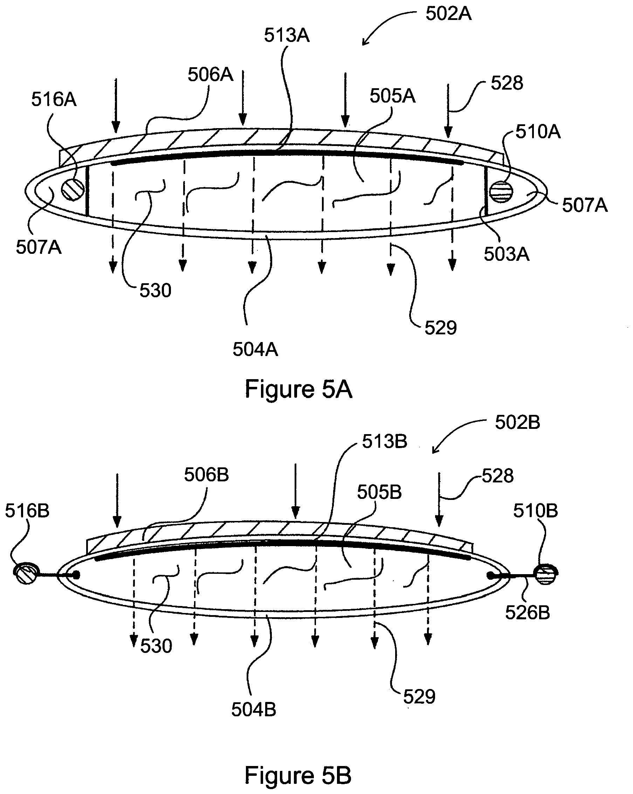

Reference is now made to Figures 5A and 5B which schematically illustrate cross-sectional views A-A of exemplary longitudinal solar panels **502A** and **502B,** respectively, including a fluorescent gas **530,** according to some embodiments of the present invention. The cross-sectional views are from a same direction as shown in Figure 2 for panel **202.** Optionally, solar panels **500A** and **500B** are elliptically shaped to allow for improved airflow around the panels.

In Figure 5A, solar panel **502A** includes a PV module **506A** and a flexible sheet membrane **504A** including a cavity **505A** with a fluorescent gas **530** (for example, when ionized, neon, argon, mercury, krypton, xenon, or combinations thereof). Solar panel **502A** is optionally similar to panels **102** or **202** in Figures 1 or 2, respectively, and is configured to generate electricity from solar energy **528** impinging on PV modules **506A.** Optionally, solar panel **502A** produces a fluorescent light **529** by exciting gas **530** inside cavity **505A** through electromagnetic radiation generated by power line **510A** located inside a compartment **507A** inside the cavity. Optionally, a barrier wall **503A** separates power line **510A** from the rest of cavity **505A.** Optionally, dummy line **516A** is similarly located inside cavity **505A** inside a separate compartment **507A** separated from the rest of the cavity by a second barrier wall **503A.** Optionally, dummy line **516A** is connected to the neutral line of the electrical grid (or other 0 volt source).

In some embodiments, sheet **504A** is translucent and cavity **505A** includes a phosphorescent coating. Optionally, a reflective cover **513A** is included inside cavity **505A** to direct the light in a predetermined direction, for example, downwards. Optionally, reflective cover **513A** is a reflective coating on sheet **504A** inside cavity **505A.**

In Figure 5B, solar panel **502B** includes a PV module **506B; and** a flexible sheet membrane **504B** including a cavity **505B** with a reflective cover **513B** and containing a fluorescent gas **530.** Solar panel **502B** is similar to solar panel **502A** shown in Figure 5A with the difference that power line **510B** and dummy line **516B** are externally attached to panel **502B** through electrically isolating clips **526B.**

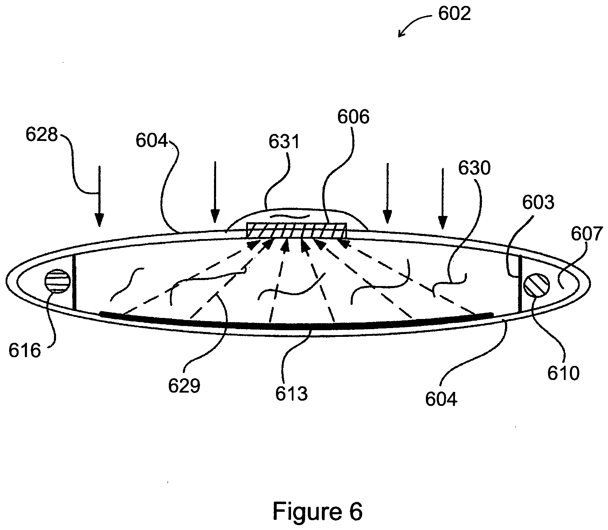

Reference is now made to Figure 6 which schematically illustrates a cross-sectional view A-A of an exemplary longitudinal solar panel **602** including a photovoltaic module **606** for concentrated radiation, according to some embodiments of the present invention. Optionally, solar panel **602** includes an elliptically shaped cross section to allow for improved airflow around the panel.

In some embodiments, solar panel **602** includes a concentrated radiation PV module **606** and a translucent flexible sheet membrane **604** including a cavity **605** with a fluidic gas **630** such as for example helium Optionally, fluidic gas **630** is used for cooling. Solar panel **602** is optionally similar to panels **102** or **202** in Figures 1 or 2, respectively, and is configured to generate electricity from solar energy **628** impinging on a reflective cover **613** inside cavity **605,** the reflective cover shaped to reflect the impinging light towards PV module **606.** Optionally, reflective cover **613** is a reflective coating on sheet **604** inside cavity **605.** Optionally, reflective cover **613** is hyperbolically shaped. Optionally, reflective cover includes a fresnell lens with longitudinal strips. Additionally or alternatively, PV module **606** is enclosed within a cap **613** containing the fluid gas for cooling the module.

In some embodiments, power line **610** is located inside a compartment **607** inside cavity **605.** Optionally, a barrier wall **603** separates power line **610** from the rest of cavity **605.** Optionally, dummy line **616** is similarly located inside cavity **605** inside a separate compartment **607** separated from the rest of the cavity by a second barrier wall **603.** Optionally, power line **610** and dummy line **616** may be located outside panel **602.**

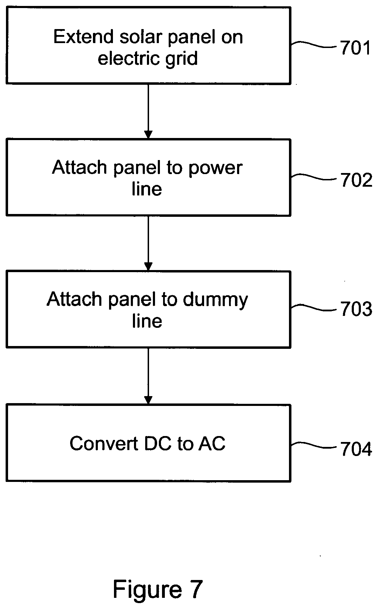

Reference is now made to Figure 7 which illustrates a flow chart of an exemplary method to produce electricity using electric grid solar energy harvesting system **100** shown in Figure 1, according to some embodiments of the invention. The method described is for illustrative purposes only, and it should be evident to an ordinary person skilled in the art that there may be other ways of implementing the method and which may include adding steps, removing steps, interchanging steps, and the like.

At **701,** optionally, solar panels **102** are extended longitudinally along the grid between pylons 8. Optionally, prior to extending solar panels **102,** three dummy lines **116** are extended between cantilevered supports **128.** Optionally, motor **126** is actuated for lowering supports **128** to the ground for installation purposes.

At **702,** optionally solar panels **102** are attached to power lines **110, 112** and **114.** Optionally, panels **102** are attached by means of electrically insulating clips, for example, as shown in Figure 3B at **326B.** Optionally, panels **102** are attached to the power lines using clips similar to that shown in Figure 3C at **326C.**

At **703,** optionally solar panels **102** are attached to dummy lines **116.** Optionally, panels **102** are attached by means of electrically insulating clips, for example, as shown in Figure 3B at **326B.** Optionally, panels **102** are attached to the power lines using clips similar to that shown in Figure 3C at **326C.**

At **704,** solar panels **102** generate DC from collected solar energy. The DC is converted to AC by an inverted and fed into the electric grid. The counter monitors the amount of AC electricity fed.

The terms "comprises", "comprising", "includes", "including", "having" and their conjugates mean "including but not limited to". This term encompasses the terms "consisting of" and "consisting essentially of".

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

Although the invention has been described in conjunction with specific embodiments thereof, it is evident that many alternatives, modifications and variations will be apparent to those skilled in the art. Accordingly, it is intended to embrace all such alternatives, modifications and variations that fall within the scope of the appended claims.

## Claims

1. A grid-mounted solar energy system (100), wherein the grid is operable to supply alternating current (AC) power independently of the solar energy system and comprises at least two pylons (108) supporting power lines (110, 112, 114), the solar energy system comprising one or more solar panels (102) extending longitudinally along a portion of the length between the pylons (108) and supported by at least two support cables, the one or more solar panels (102) including an electrically insulating material (104) and a photovoltaic module (106) attached to the electrically insulating material (104),
the support cables extended between and attached to the at least two pylons (108) and wherein the support cables comprise at least one live AC power line (110, 112, 114) of the grid.

2. The grid-mounted solar energy system (100) of claim 1, wherein the electrically insulating material (104) comprises an electrically insulating flexible membrane sheet (204).

3. The grid-mounted solar energy system (100) of claim 1, wherein said at least one live AC power line (110, 112, 114) is embedded in the electrically insulating material (304).

4. The grid-mounted solar energy system (100) of claim 1, wherein at least one of the one or more solar panels (302B) comprises electrically insulating clips (326B) for attaching said solar panel (302B) to said at least one live AC power line (110, 112, 114).

5. The grid-mounted solar energy system (100) of claim 1, comprising a central support cable (118) extending between the at least two pylons (108) and tension cables (122) for connecting at least one of said one or more solar panels (102) to the central support cable (118).

6. The grid-mounted solar energy system (100) of claim 1, wherein at least one of said solar panels (102) produces a light.

7. The grid-mounted solar energy system of claim 1, further comprising at least one inverter installed on at least one of the one or more solar panels (102), and configured to convert direct current, output by said at least one of the one or more solar panels (102), to alternating current, and to feed the alternating current into the grid.

8. A method for harvesting solar energy using a grid-mounted solar energy system (100), wherein the grid is operable to supply alternating current (AC) power independently of the solar energy system and comprises at least two pylons (108) supporting power lines (110, 112, 114), the method comprising the step of attaching one or more solar panels (102) to at least two support cables, the support cables extended between and attached to the at least two pylons (108),
wherein the one or more solar panels (102) extends longitudinally along a portion of the length between the pylons (108), and the one or more solar panels (102) including an electrically insulating material (104) and a photovoltaic module (106) attached to the electrically insulating material (104), and
the support cables comprise at least one live AC power line (110, 112, 114) of the grid.

9. The method of claim 8, wherein the electrically insulating material (104) comprises an electrically insulating flexible membrane sheet (204).

10. The method of claim 8, further comprising at least one of embedding at least one of the power lines (310A) in the electrically insulating material (104) and attaching at least one of said one or more solar panels (302B) to the at least one AC power line (110, 112, 114) using electrically insulating clips (326B).

11. The method of claim 8, further comprising the steps of:
converting direct current output by said at least one of the one or more solar panels (102), to alternating current; and
feeding the alternating current into the grid.

## Patentansprüche

1. Ein netzgetragenes Solarenergiesystem (100), wobei das Netz betreibbar ist, um Wechselstrom (AC) unabhängig von dem Solarenergiesystem zu liefern, und mindestens zwei die Stromleitungen (110, 112, 114) tragende Pylonen (108) umfasst, das Solarenergiesystem umfassend ein oder mehrere Solarpanels (102), die sich in Längsrichtung entlang eines Teils der Länge zwischen den Pylonen (108) erstrecken und durch mindestens zwei Tragseile getragen werden, ein oder mehreren Solarpanels (102), die ein elektrisch isolierendes Material (104) und ein photovoltaisches Modul (106) einschließen, das an dem elektrisch isolierenden Material (104) angebracht ist, wobei die Tragseile zwischen den mindestens zwei Pylonen (108) verlaufen und an diesen befestigt sind und wobei die Tragseile mindestens eine stromführende Wechselstromleitung (110, 112, 114) des Stromnetzes umfassen.

2. Das netzgetragenes Solarenergiesystem (100) nach Anspruch 1, wobei das elektrisch isolierende Material (104) eine elektrisch isolierende flexible Membranfolie (204) umfasst.

3. Das netzgetragenes Solarenergiesystem (100) nach Anspruch 1, wobei mindestens eine Wechselstromleitung (110, 112, 114) in das elektrisch isolierende Material (304) eingebettet ist.

4. Das netzgetragenes Solarenergiesystem (100) nach Anspruch 1, wobei mindestens eine der einen oder mehreren Solarpanels (302B) elektrisch isolierende Klammern (326B) zum Befestigen des Solarpanels (302B) an der mindestens einen Wechselstromleitung (110, 112, 114) aufweist.

5. Das netzgetragenes Solarenergiesystem (100) nach Anspruch 1, dass ein zentrale Tragseil (118) umfasst, das sich zwischen den mindestens zwei Pylonen (108) und Spannseilen (122) erstreckt, zum Verbinden von mindestens einem von dem einen oder den mehreren Solarpanels (102) am zentralen Tragkabel (118).

6. Das netzgetragenes Solarenergiesystem (100) nach Anspruch 1, wobei mindestens eines der Solarpanels (102) ein Licht erzeugt.

7. Das netzgetragenes Solarenergiesystem nach Anspruch 1, ferner umfassend mindestens einen Wechselrichter, der an mindestens einem der einen oder mehreren Solarpanels (102) installiert ist, und um den Gleichstrom umzuwandeln konfiguriert ist,, Leistung der von dem an mindestens einem der einen oder mehreren Solarpanels (102), wobei das Wechselstrom (AC) liefernerzeugt wird, und den erzeugten Wechselstrom in das Netz einzuspeisen.

8. Verfahren zum Ernten von Solarenergie unter Verwendung eines netzgetragenes Solarenergiesystems (100), wobei das Netz betreibbar ist, um Wechselstrom (AC) unabhängig von dem Solarenergiesystem zu liefern, und mindestens zwei Pylonen (108) aufweist, die die Stromleitungen (110, 112, 114) stützen, das Verfahren umfasst außerdem das Anbringen einer oder mehrerer Solarpanels (102) an mindestens zwei Tragseilen, wobei sich die Tragseile zwischen den mindestens zwei Pylonen (108) erstrecken und an diesen befestigt sind, wobei ein oder mehrere Solarpanels (102) erstrecken sich in Längsrichtung entlang eines Abschnitts der Länge zwischen den Pylonen (108), das eine oder die mehreren Solarpanels (102) ein elektrisch isolierendes Material (104) enthalten, und ein daran befestigtes photovoltaisches Modul (106), und die Tragseile mindestens eine stromführende Wechselstromleitung (110, 112, 114) des Netzes umfasst.

9. Verfahren nach Anspruch 8, wobei das elektrisch isolierende Material (104) eine elektrisch isolierende flexible Membranfolie (204) umfasst.

10. Verfahren nach Anspruch 8, das ferner das Einbetten von mindestens einer der Stromleitungen (310A) in das elektrisch isolierende Material (104) umfasst, und das Anbringen von mindestens einer der einen oder mehreren Solarpanels (302B) mit mindestens einer Wechselstromleitung (110, 112, 114), unter Verwendung von elektrisch isolierenden Klammern (326B), umfasst.

11. Verfahren nach Anspruch 8, ferner umfassend die Schritte:
Umwandeln des Gleichstroms in Wechselstrom, der von der/den Solarpanels (102) ausgegeben wird, und
Einspeisen des Wechselstroms in das Netz.

## Revendications

1. Système d'énergie solaire monté sur un réseau (100), dans lequel le réseau peut fonctionner pour fournir un courant alternatif (AC), indépendamment du système d'énergie solaire et comprend au moins deux pylônes (108) supportant des lignes électriques (110,112,114), le système d'énergie solaire comprenant un ou plusieurs panneaux solaires (102) s'étendant longitudinalement le long d'une partie de la longueur entre les pylônes (108) et supportés par au moins deux câbles de support, le ou les panneaux solaires (102) comprenant un matériau électriquement isolant (104) et un module photovoltaïque (106) fixé au matériau électriquement isolant (104), les câbles de support s'étendant entre et fixés aux au moins deux pylônes (108), et dans lequel les câbles de support comprenant au moins une ligne d'alimentation en courant alternatif (110, 112, 114) de la grille.

2. Système d'énergie solaire monté sur un réseau (100) selon la revendication 1, dans lequel le matériau électriquement isolant (104) comprend une feuille de membrane flexible électriquement isolante (204).

3. Système d'énergie solaire monté sur un réseau (100) selon la revendication 1, dans lequel ladite au moins une ligne d'alimentation en courant alternatif (110, 112, 114) est intégrée dans le matériau électriquement isolant (304).

4. Système d'énergie solaire monté sur un réseau (100) selon la revendication 1, dans lequel au moins un des panneaux solaires (302B) comprend des pinces électriquement isolantes (326B) pour fixer ledit panneau solaire (302B) audit au moins une ligne d'alimentation en courant alternatif (110, 112, 114).

5. Système d'énergie solaire monté sur réseau (100) selon la revendication 1, comprenant un câble de support central (118) s'étendant entre au moins deux pylônes (108) et un câble de tension (122) pour connecter au moins l'un desdits panneaux solaires (102) au câble de support central (118).

6. Système d'énergie solaire monté sur un réseau (100) selon la revendication 1, dans lequel au moins l'un desdits panneaux solaires (102) produit une lumière.

7. Système d'énergie solaire monté sur un réseau (100) selon la revendication 1, comprenant en outre au moins un onduleur installé sur au moins un des un ou plusieurs panneaux solaires (102), et configuré pour convertir le courant continu, délivré par lesdits au moins un du ou des panneaux solaires (102), au courant alternatif, et alimenter le courant alternatif dans le réseau.

8. Procédé de récolte d'énergie solaire utilisant un système d'énergie solaire monté sur un réseau (100), dans lequel le réseau peut fonctionner pour fournir un courant alternatif (AC) indépendamment du système d'énergie solaire et comprend au moins deux pylônes (108) supportant lignes d'alimentation (110, 112, 114), le procédé comprenant l'étape consistant à fixer un ou plusieurs panneaux solaires (102) à au moins deux câbles de support, les câbles de support s'étendant entre et fixés aux au moins deux pylônes(108), dans lequel le ou les panneaux solaires (102) s'étendent longitudinalement le long d'une partie de la longueur des deux pylônes (108), et le ou les panneaux solaires (102) comprenant un matériau électriquement isolant (104) et un module photovoltaïque (106) fixé au matériau électriquement isolant (104), et les câbles de support comprennent au moins une ligne d'alimentation en courant alternatif (110, 112, 114) sous tension du réseau.

9. Procédé selon la revendication 8, dans lequel le matériau électriquement isolant (104) comprend une feuille de membrane flexible électriquement isolante (204).

10. Procédé selon la revendication 8, comprenant en outre au moins l'une d'incorporer au moins une ligne d'alimentation (310A) dans le matériau électriquement isolant (104) et d'attacher au moins l'un desdits un ou plusieurs panneaux solaires (302B) à au moins une ligne d'alimentation en courant alternatif (110, 112, 114) utilisant des pinces électriquement isolantes (326B).

11. Procédé selon la revendication 8, comprenant en outre les étapes consistant à: convertir le courant continu émis par ledit au moins un des un ou plusieurs panneaux solaires (102), en courant alternatif, et à introduire le courant alternatif dans le réseau.
